# EUROPEAN PATENT APPLICATION

(11) **EP 1 936 504 A1**
(43) Date of publication of application: **25.06.2008**
(21) Application number: 06126367.9
(22) Date of filing: 18.12.2006
(51) Int. Cl.: G06F 11/263

(54) **Cross-target test selection criterion**

(71) Applicant: Leirios, 25000 Besancon (FR)
(72) Inventor: Legeard, Bruno, 25000 Besancon (FR); Bernard, Eddy, 80336 München (DE)
(74) Representative: Tetaz, Franck Claude Edouard

(57) **Abstract**

The present invention relates to a method of testing a system such an integrated device and/or a computer program, characterized in that it comprises selecting a test selection criterion, generating a test set or sequence from said test selection criterion and at least one operation behavior model of the system in such a way that said test set or sequence comprises all test cases corresponding to the partition of the domain related to the collateral behavior of the system, applying the generated test set or sequence to the system. This selected test selection criterion is called "cross-target" because it makes it possible to relate a test target of an operation with other test targets.
Another object of the invention relates to a test criteria called cross-target test selection criteria wherein the test set or sequence generated from said test criteria and at least one operation behavior model of the system comprises all test cases corresponding to the partition of the domain related to the collateral behavior of the system.

## Description

### FIELD OF THE INVENTION

The present invention relates to testing a system such an integrated device, a computer program or a combination of an integrated device and a computer program and more particularly to a method to select criterion for testing such a system according to automated test generation process.

### BACKGROUND OF THE INVENTION

The methods for testing systems, such as micro-processors, integrated circuit, computer program or similar, have become increasingly sophisticated due to an increase of functionality of these systems.

The characterization and testing these systems play a major role in ensuring the performance of these systems. A system can be any software, hardware or a combination of hardware and software whose behavior may be characterized by any kind of detectable signal or data.

Testing a system, called hereinafter System Under Test (SUT) can be defined as performing a set of actions to perform under given conditions, observing the output data of the SUT, comparing the output data with the expected output data and formulating a verdict from the comparison of observed and expected behaviors. A test consists in a determined set or sequence of actions to perform, associated with eventual action conditions and/or data, and of expected output data of the SUT pursuant to the execution of each action of the test.

Generating a test to functionally verify the design of the system needs to select the operations to invoke and to select any relevant data, conditions and timing.

Methods and associated test generation tools for automatically generating a test are well known. These methods usually comprise specifying one or more test criterion, generating a test set or sequence by associating one or more test parameters with a test pattern and applying the generated test set or sequence to the SUT. It attempts to find incorrect or missing functions, interface errors, errors in data structures or external database access, performance errors, and initialization and termination errors.

Test generation tools include a plurality of test criteria : functional coverage criteria, data coverage criteria, requirements-based coverage criteria, explicit test case specifications, random and stochastic criteria and fault-based criteria.

The three widely used data coverage criteria known in the state of the art are exhaustive testing, boundary value testing, stochastic/random testing and pairwise testing.

The boundary value testing permits to choose some boundary values, such as maximum and/or minimum, of the variable domains. Boundary-value testing is testing of unusual or extreme situations that a computer code should be able to handle. It is a form of Black Box Testing which complements white box testing. Some examples of boundary value tests are :
- Maximum negative, maximum positive, and 0 inputs or outputs;
- Input or output strings at size limits, 1 character beyond size limits, the empty string, and strings of 1 character;
- Input or output numeric values at size limits and 1 beyond size limits;
- Empty input files and files with one character in them;
- For a range of values bounded by a and b, test (a-1), a, (a+1), (b-1), b, (b+1);
- If input conditions specify a number of values n, test with (n-1), n and (n+1) input values;
- Apply the above to output conditions (e.g., generate table of minimum and maximum size);
- If internal program data structures have boundaries (e.g., buffer size, table limits), use input data to exercise structures on boundaries.

The stochastic/random testing permits to choose a homogenous distribution of values over the variable domain in such a manner that the input values from the variable domains are stochastically selected. First, the input population is defined by building a stochastic model (or set of models) that defines the structure of how the target system is stimulated by its environment. Multiple models may be constructed by decomposing the population into subpopulations. In order to allow for statistical inference, probabilities are used in the models; although it is possible to ignore the probabilities if statistical inference is not desired. Next, a sampling algorithm that produces test cases directly from the models is defined. Finally, when samples are generated randomly it is possible to use standard reliability analysis to infer population characteristics based on the randomly generated sample.

The pairwise testing is a combinatorial approach helping to choose the way data values are combined for a system comprising multiple variables. Pairwise testing is a combinatorial testing method that, for each pair of input parameters to a system tests all possible discrete combinations of those parameters. Using carefully chosen test vectors, this can be done much faster than an exhaustive search of all combinations of all parameters, by "parallelizing" the tests of parameter pairs. The number of tests is typically O(*nm*), where *n* and *m* are the number of possibilities for each of the two parameters with the most choices.

Many testing methods regard all-pairs testing of a system or subsystem as a reasonable cost-benefit compromise between often computationally infeasible higher-order combinatorial testing methods, and less exhaustive methods which fail to exercise all possible pairs of parameters. Because no testing technique can find all bugs, the criterion all-pairs testing is typically used together with other quality assurance techniques such as unit testing, symbolic execution, fuzz testing, code review or any test according to the test criteria described above.

These methods for automatically generating a test form these data-oriented criteria present the drawback of generating a huge number of test cases. Moreover, most of the test cases generated by these methods are inefficient because lots of faults on the SUT appears on the interaction between behaviors of the system due to some side effect on variable assignments.

### BRIEF DESCRIPTION OF THE INVENTION

It is therefore an object of the invention to overcome these drawbacks by providing a novel method to select criterion that a test generation tool, usually a computer program, can provide to a validation engineer in order to configure test generation.

To this end, the invention relates to a method of testing a system such an integrated device and/or a computer program, characterized in that it comprises selecting a test selection criterion, generating a test set or sequence from said test selection criterion and at least one operation behavior model of the system in such a way that said test set or sequence comprises all test cases corresponding to the partition of the domain related to the collateral behavior of the system, applying the generated test set or sequence to the system.

This selected test selection criterion is called "cross-target" because it makes it possible to relate a test target of an operation with other test targets.

According to an essential characteristic of the invention, the step of generating a test set or sequence, for at least one operation of the system, comprises the following step of computing at least one value according to a set of criteria specific to each other operation targets, and providing said value to the currently tested target.

The operation consists in a plurality of operations that participate to the same specification package or in a plurality of operations.

In another embodiment, the test set or sequence is generated from said test selection criterion called cross-target test selection criterion, at least one operation behavior model of the system and at least one variable of the behavior model of the system in such a manner that collateral behaviors are not restricted to belong to the same operation.

The method further comprises the steps of selecting at least one test selection criteria, generating a test set or sequence from said cross-target test selection criterion, said selected test criteria and at least one operation behavior model of the system in such a way that said test set or sequence comprises all test cases corresponding to the partition of the domain related to a collateral behavior of the system, and applying the generated test set or sequence to the system.

Moreover, the test criteria is selected among the group of functional coverage criteria, data coverage criteria requirements-based coverage criteria, explicit test case specifications, random and stochastic criteria and fault-based criteria. The data coverage criteria comprise the exhaustive testing, the boundary value testing, the stochastic/random testing and the pairwise testing, or any other method aiming at electing one or several values from a set.

Another object of the invention relates to a test criteria for testing a system such an integrated device and/or a computer program, characterized in that the test set or sequence generated from said test criteria and at least one operation behavior model of the system comprises all test cases corresponding to the partition of the domain related to the collateral behavior of the system.

According to an essential characteristic of the invention, for at least one operation of the system, at least one value is computed according to a set of criteria specific to each other operation targets, said value is provided to the currently tested target.

The operation consists in a plurality of operations that participate to the same specification package and/or in a plurality of operations.

A last object of the invention relates to a computer program, embodied in a tangible medium, the instructions of said computer program causing a machine to perform operations comprising selecting a test selection criterion called cross-target test selection criterion and generating a test set or sequence from said cross-target test selection criterion and at least one operation behavior model of the system in such a way that said test set or sequence comprises all test cases corresponding to the partition of the domain related to the collateral behavior of the system.

The computer program comprises, in the step of generating a test set or sequence, for at least one operation of the system, the following step of computing at least one value according to a set of criteria specific to each other operation targets, and providing said value to the currently tested target.

Moreover, the operation consists in a plurality of operations that participate to the same specification package and/or in a plurality of operations.

The details of one or more embodiments of the invention are set forth in the accompanying drawings and the description below. Other features and advantages will be apparent from the description and drawings, and from the claims.

### BRIEF DESCRIPTION OF THE DRAWINGS

Fig. 1 is a flow diagram depicting a method of testing a system such an integrated device and/or a computer program in accordance with the invention,

Fig. 2 is a control flow graph of a tested operation of the system under test.

### DETAILED DESCRIPTION OF THE INVENTION

To facilitate understanding, identical reference numerals have been used, wherever possible, to designate identical elements that are common to the figure.

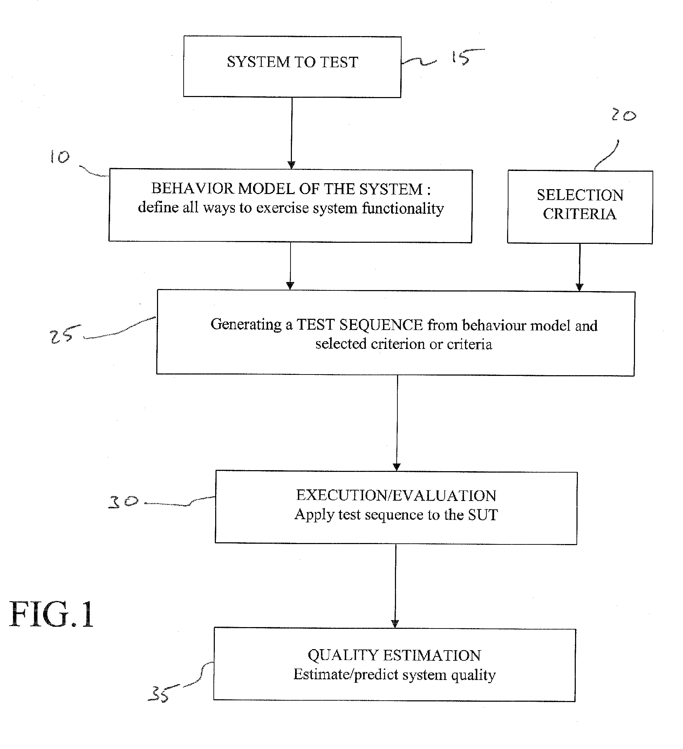

Figure 1 is a flow diagram depicting a method of testing a system such an integrated device and/or a computer program in accordance with the invention. The method begins at step 10 by determining the behavior model of the system 15 to be tested. At step 20, at least one test selection criterion is selected. At step 25, a test set or sequence is generated from said test selection criterion called cross-target test selection criterion and at least one operation behavior model of the system in such a way that said test set or sequence comprises all test cases corresponding to the partition of the domain related to the collateral behavior of the system.

The step 25 of generating a test set or sequence, for at least one operation of the system, comprises the following step of computing at least one value according to a set of criteria specific to each other operation targets, and providing said value to the currently tested target.

At step 30, the test sequence is applied to the system under test (SUT) and the output data are analyzed to estimate or predict a system quality in a step 35.

The operation mentioned in step 25 consists in a plurality of operations that participate to the same specification package and/or in a plurality of operations.

According to another embodiment of the invention, at step 25, the test set or sequence is generated from said cross-target test selection criterion, at least one operation behavior model of the system and at least one variable of the behavior model of the system in such a manner that collateral behaviors are not restricted to belong to the same operation.

Moreover, at step 25, the test sequence can be further generated from at least an additional test criterion. Consequently, the method comprises the steps of selecting at least one additional test criterion, generating a test set or sequence from said cross-target test selection criterion, said selected additional test criteria and at least one operation behavior model of the system in such a way that said test set or sequence comprises all test cases corresponding to the partition of the domain related to the collateral behavior of the system, and applying the generated test set or sequence to the system.

The additional test criteria are selected among the group of functional coverage criteria, data coverage criteria, requirements-based coverage criteria, explicit test case specifications, random and stochastic criteria and fault-based criteria. Said data coverage criteria comprise the exhaustive testing, the boundary value testing, the stochastic/random testing and the pairwise testing for example.

### Example:

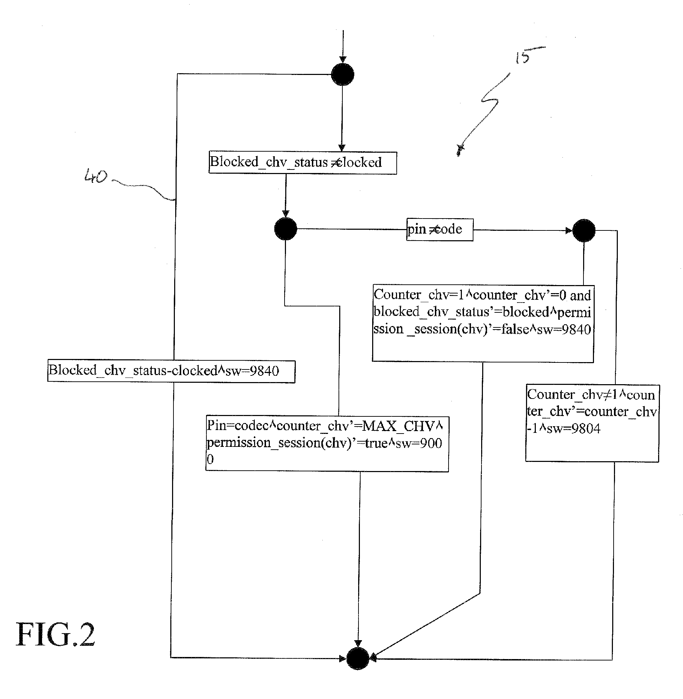

Referring to figure 2 which is a control flow graph of a tested operation of the system under test, said the system under test 15 is defined by the following specification:

```
 sw <-- VERIFY_CHV(code) =
  PRE code : CODE
  THEN
    IF (blocked_chv_status = blocked) THEN sw := 9840
       ELSE
         IF (pin = code) THEN counter_chv := MAX_CHV permission_session(chv) :=
 true ∥ sw := 9000
                 ELSE
                    IF (counter_chv = 1) THEN
                      counter_chv := 0 || blocked_chv_status := blocked ||
 permission_session(chv) := false || sw := 9840
                             ELSE counter_chv := counter_chv - 1 || sw := 9804
                        END
                       END
              END
          END
```

Considering the branch labelled 40 of the control flow graph. According to prior art, selecting one criterion or a combination of criteria of prior art, i.e. criteria selected among the group of functional coverage criteria, data coverage criteria, requirements-based coverage criteria, explicit test case specifications, random and stochastic criteria and fault-based criteria, to test this branch, the test sequence will not consider the partition of the input variable "pin".

Please note that the "all-value" test selection criterion for this variable can be selected to generate a test sequence, but this gives generally a huge number of test cases.

○According to the invention, to test the branch 40 of the control flow graph, one value is computed according to the set of criteria specific to each other operations targets (as if this target were tested) and is provided to the currently tested target. Consequently, the test generator tool will apply the cross-target test selection criteriona according to the invention to the input variable "pin" and generate the two following test cases: blocked_chv_status = blocked and pin = code.
○ blocked_chv_status = blocked and pin ≠ code.

According to the cross-target test selection criterion according to the invention, all possible partition of its domain will be exercised by a test case considering a certain tested path in the control-flow of a tested operation, and a certain variable on which is applied the criterion.

The cross-target test selection criterion according to the invention is particularly useful for cross-target testing.

It is obvious that the cross-target test selection criterion according to the invention can be combined with at least one test selection criteria of prior art without departing of the invention.

Lastly, it is clear that the method according to the invention may be suitable for testing any system such an integrated device, a computer program or a combination of an integrated device and a computer program and that the examples given above are no more than particular illustrations implying no limitation with respect to the fields of application of the invention.

## Claims

1. A method of testing a system such an integrated device and/or a computer program, **characterized in that** it comprises :
- selecting a test selection criterion,
- generating a test set or sequence from said test selection criterion and at least one operation behavior model of the system in such a way that said test set or sequence comprises all test cases corresponding to the partition of the domain related to the collateral behavior of the system,
- applying the generated test set or sequence to the system.

2. Method according to claim 1 **characterized in that** the step generating a test set or sequence, for at least one operation of the system, comprises the following step:
- at least one value is computed according to a set of criteria specific to each other operation targets,
- said value is provided to the currently tested target.

3. Method according to any claim 1 or 2 **characterized in that** the operation consists in a plurality of operations that participate to the same specification package.

4. Method according to any claim 1 or 2 **characterized in that** the operation consists in a plurality of operations.

5. Method according to any claim 1 to 4 **characterized in that** the test set or sequence is generated from said test selection criterion called cross-target test selection criterion, at least one operation behavior model of the system and at least one variable of the behavior model of the system in such a manner that collateral behaviors are not restricted to belong to the same operation.

6. Method according to any claim 1 to 5 **characterized in that** it further comprises :
- selecting at least one additional test selection criteria,
- generating a test set or sequence from said cross-target test selection criterion, said selected additional test criteria and at least one operation behavior model of the system in such a way that said test set or sequence comprises all test cases corresponding to the partition of the domain related to a collateral behavior of the system,
- applying the generated test set or sequence to the system.

7. Method according to claim 6 **characterized in that** the test criteria is selected among the group of functional coverage criteria, data coverage criteria requirements-based coverage criteria, explicit test case specifications, random and stochastic criteria and fault-based criteria.

8. Method according to claim 7 **characterized in that** the data coverage criteria comprises the exhaustive testing, the boundary value testing, the stochastic/random testing and the pairwise testing, or any other method aiming at electing one or several values from a set.

9. A test criteria for testing a system such an integrated device and/or a computer program, **characterized in that** the test set or sequence generated from said test criteria called cross-target test selection criterion and at least one operation behavior model of the system comprises all test cases corresponding to the partition of the domain related to the collateral behavior of the system.

10. Test criteria according to claim 9 **characterized in that** for at least one operation of the system:
- at least one value is computed according to a set of criteria specific to each other operation targets,
- said value is used or may be used by the currently tested target.

11. Test criteria according to any claim 9 or 10 **characterized in that** the operation consists in a plurality of operations that participate to the same specification package.

12. Method according to any claim 9 or 10 **characterized in that** the operation consists in a plurality of operations.

13. A computer program, embodied in a tangible medium, the instructions of said computer program causing a machine to perform operations comprising
- selecting a test selection criterion,
- generating a test set or sequence from said test selection criterion called cross-target test selection criterion and at least one operation behavior model of the system in such a way that said test set or sequence comprises all test cases corresponding to the partition of the domain related to the collateral behavior of the system.

14. Computer program according to claim 13 **characterized in that** the step generating a test set or sequence, for at least one operation of the system, comprises the following step:
- at least one value is computed according to a set of criteria specific to each other operation targets,
- said value is provided to the currently tested target.

15. Method according to any claim 13 or 14 **characterized in that** the operation consists in a plurality of operations that participate to the same specification package.

16. Method according to any claim 13 or 14 **characterized in that** the operation consists in a plurality of operations.
